# EUROPEAN PATENT SPECIFICATION

(11) **EP 0 893 338 B1**
(45) Date of publication and mention of the grant of the patent: **08.09.2004**
(21) Application number: 98113316.8
(22) Date of filing: 16.07.1998
(51) Int. Cl.: B62M 23/02

(54) **Assist force control device in motor-assisted bicycle**
Steuerungseinrichtung für Fahrrad mit Hilfsmotor
Dispositif de contrôle pour bicyclette à moteur auxiliaire

(30) Priority: 22.07.1997 JP 19552997; 18.09.1997 JP 25375897; 22.07.1997 JP 19553097
(43) Date of publication of application: 27.01.1999
(73) Proprietor: Honda Giken Kogyo Kabushiki Kaisha, Minato-ku, Tokyo (JP)
(72) Inventor: Kawaguchi, Kenji, 1-4-1 Chuo, 1-chome Wako-shi, Saitama (JP); Iwadate, Toru, 1-4-1 Chuo,1-chome Wako-shi, Saitama (JP); Honda, Satoshi, 1-4-1 Chuo,1-chome Wako-shi, Saitama (JP); Shimmura, Hiroyuki, 1-4-1 Chuo,1-chome Wako-shi, Saitama (JP)
(74) Representative: Liska, Horst, Dr.-Ing.

(56) References cited:
- EP-A- 0 517 224
- EP-A- 0 569 954
- EP-A- 0 590 674
- EP-A- 0 729 881
- US-A- 5 603 388

## Description

The present invention relates generally to a motor-assisted bicycle according to the preamble of claim 1.

A motor-assisted bicycle according to the preamble of claim 1 is known from EP-A-0 569 954.

This document discloses an assist ratio which is changed to "0" when the depression force exceeds a predetermined force value over a predetermined period to implement a failure control.

Such a motor-assisted bicycle is known from Japanese Patent Laid-open Publication No. 7-309283, for example. In this motor-assisted bicycle, the operation of an electric motor is controlled in such a manner that in a low-speed region less than or equal to 6 km/h, for example, an assist ratio (assist force / depression force) defined as the ratio of an assist force by the electric motor to a depression force by a rider is set to a value (e.g., 3) greater than 1, whereas in a medium-speed region greater than 6 km/h, for example, the assist ratio is set to 1, for example.

In the above prior art, however, the assist ratio is set in no relation to the depression force. Accordingly, when the rider with a weak depression force, such as a female or old person pedals the bicycle on an upward slope, a large assist force cannot be obtained, so that it is hard for the rider to pedal on the upward slope. Further, although the depression force is fixed, the assist force varies with the vehicle speed in the low- and medium-speed regions, so that the rider may feel discomfort. Besides, in case that the rider is weak, the vehicle speed necessarily decreases during running on an upward slope, so that the assist force is rapidly increased in a low-speed region less than or equal to 6 km/h, for example. As a result, there is a possibility that the rider may feel discomfort due to such a rapid increase in the assist force.

It is accordingly an object of the present invention to provide an assist force control device in a motor-assisted bicycle which can provide an assist force according to a depression force and can fix the assist force for a fixed depression force to allow comfort pedaling.

This object is achieved by the features of claim 1.

According to the invention there is provided a motor-assisted bicycle having depression force detecting means for detecting a depression force by a rider, and an electric motor capable of exerting an assist force according to the depression force detected by said depression force detecting means, wherein an assist force control device is provided comprising a controller for controlling the operation of said electric motor, characterized in that said controller controls the operation of said electric motor so that an assist ratio (assist force / depression force) defined as the ratio of the assist force by said electric motor to the depression force by said rider is increased in a predetermined range of the depression force detected by said depression force detecting means.

According to this configuration, the assist ratio is changed according to the depression force, so that an assist force according to the depression force can be obtained. Further, when the depression force is fixed, the assist force is unchanged to thereby allow comfort pedaling.

Preferably, said controller controls the operation of said electric motor so that when the depression force detected by said depression force detecting means is greater than or equal to a set force, said assist ratio is set to 1, whereas when the depression force detected by said depression force detecting means is less than said set force, said assist ratio is set to a value greater than 1. With this configuration, a large assist force is exerted for the rider with a weak depression force, and an excessive increase in the assist force is prevented for the rider with a strong depression force. Further, when the depression force is fixed, the assist force is unchanged.

Preferably, said controller controls the operation of said electric motor so that said assist ratio is gradually increased from 1 with an increase in the depression force detected by said depression force detecting means. With this configuration, the assist force can be increased according to the depression force irrespective of the pedaling capability of the rider. Further, when the depression force is fixed, the assist force is unchanged.

Preferably, said controller controls the operation of said electric motor so that when the depression force detected by said depression force detecting means is greater than or equal to a maximum set force greater than said set force, said assist ratio is set to a value less than 1. With this configuration, an excessive increase in resultant force as the sum of the depression force and the assist force can be avoided to thereby obtain a proper resultant force fit for the bicycle. Accordingly, the assist force by the electric motor can be made fit for the bicycle.

Preferably, the assist force control device further comprises vehicle speed detecting means for detecting a vehicle speed of said bicycle, wherein said controller controls the operation of said electric motor so that when the vehicle speed detected by said vehicle speed detecting means is in low- and medium-speed regions less than or equal to a set speed, said assist ratio is set to a value greater than or equal to 1, whereas when the vehicle speed detected by said vehicle speed detecting means is in a low-speed region less than or equal to another set speed less than said set speed, said assist ratio is decreased with an increase in the depression force detected by said depression force detecting means. With this configuration, the assist ratio can be increased in the low- and medium-speed regions to thereby allow easy pedaling. Further, when the depression force is large in the low-speed region, the assist ratio is set relatively small to thereby prevent battery consumption and overheating of the electric motor and also prevent rapid starting of the bicycle.

Preferably, there is provided a slope angle detecting means for detecting a slope angle of a road surface on which said bicycle is running, wherein said controller controls the operation of said electric motor so that when the slope angle detected by said slope angle detecting means is greater than or equal to a set angle, said assist ratio is increased from 1 with an increase in the slope angle.

According to this configuration the assist ratio is increased according to the slope angle of the road surface when the slope angle becomes greater than or equal to the set angle.

Accordingly, the assist force can be increased according to the depression force irrespective of the vehicle speed, so that the rider can easily pedal the bicycle with a weak depression force without feeling any discomfort.

Preferably, there is provided a slope angle detecting means for detecting a slope angle of a road surface on which said bicycle is running, vehicle speed detecting means for detecting a vehicle speed of said bicycle, wherein said controller controls the operation of said electric motor so that in a first condition where the vehicle speed detected by said vehicle speed detecting means is less than or equal to a set speed and the slope angle detected by said slope angle detecting means is greater than or equal to a set angle, said assist ratio is set to a value greater than 1, whereas in any conditions other than said first condition, said assist ratio is set to a value less than or equal to 1.

According to this configuration, when the vehicle speed becomes less than or equal to the set speed and the slope angle becomes greater than or equal to the set angle during running on an upward slope, the assist ratio is set to a value greater than 1. Accordingly, the rider can easily pedal the bicycle with a weak depression force without feeling any discomfort. Further, during running on a level road, the assist ratio is set to a value less than or equal to 1. Accordingly, an undue increase in load to the electric motor can be avoided to thereby extend battery life, and excessive acceleration on the level road can also be avoided.

Preferably, there is provided a vehicle speed detecting means for detecting a vehicle speed of said bicycle, wherein said controller controls the operation of said electric motor so that in a first condition where the vehicle speed detected by said vehicle speed detecting means is less than or equal to a set speed and the depression force detected by said depression force detecting means is greater than or equal to a set force, said assist ratio is set to a value greater than 1, whereas in any conditions other than said first condition, said assist ratio is set to a value less than or equal to 1.

According to this configuration, when the vehicle speed becomes less than or equal to the set speed and the depression force becomes greater than or equal to the set force during running on an upward slope, the assist ratio is set to a value greater than 1. Accordingly, an undue increase in load to the electric motor can be avoided to thereby extend battery life, and excessive acceleration on the level road can also be avoided.

Some preferred embodiments of the present invention will now be described with reference to the attached drawings.
FIG. 1 is a side view of a motor-assisted bicycle according to a first preferred embodiment of the present invention.
FIG. 2 is a vertical sectional view of a motor unit, corresponding to a cross section taken along the line 2-2 in FIG. 3.
FIG. 3 is a cross section taken along the line 3-3 in FIG. 2.
FIG. 4 is a block diagram showing the configuration of a control device for an electric motor.
FIG. 5 is a graph showing an assist ratio in relation to a depression force in the first preferred embodiment.
FIG. 6 is a graph showing an assist force and a resultant force in relation to a depression force in the first preferred embodiment.
FIG. 7 is a graph showing an assist force in relation to a depression force in a second preferred embodiment of the present invention.
FIG. 8 is a graph showing an assist ratio in relation to a depression force in a third preferred embodiment of the present invention.
FIG. 9 is a graph showing an assist ratio in relation to a depression force in a fourth preferred embodiment of the present invention.
FIG. 10 is a graph showing an assist ratio in relation to a vehicle speed and a depression force in a fifth preferred embodiment of the present invention.
FIG. 11 is a graph showing an assist ratio in relation to a vehicle speed and a depression force in a sixth preferred embodiment of the present invention.
FIG. 12 is a block diagram showing the configuration of a control device for an electric motor according to a sixth preferred embodiment of the present invention.
FIG. 13 is a graph showing an assist ratio in relation to a slope angle in the seventh preferred embodiment.
FIG. 14 is a graph showing an assist ratio in relation to a slope angle and a vehicle speed in a eighth preferred embodiment of the present invention.
FIG. 15 is a graph showing an assist ratio in relation to a slope angle and a vehicle speed in a ninth preferred embodiment of the present invention.
FIG. 16 is a graph showing an assist ratio in relation to a depression force and a vehicle speed in a tenth preferred embodiment of the present invention.

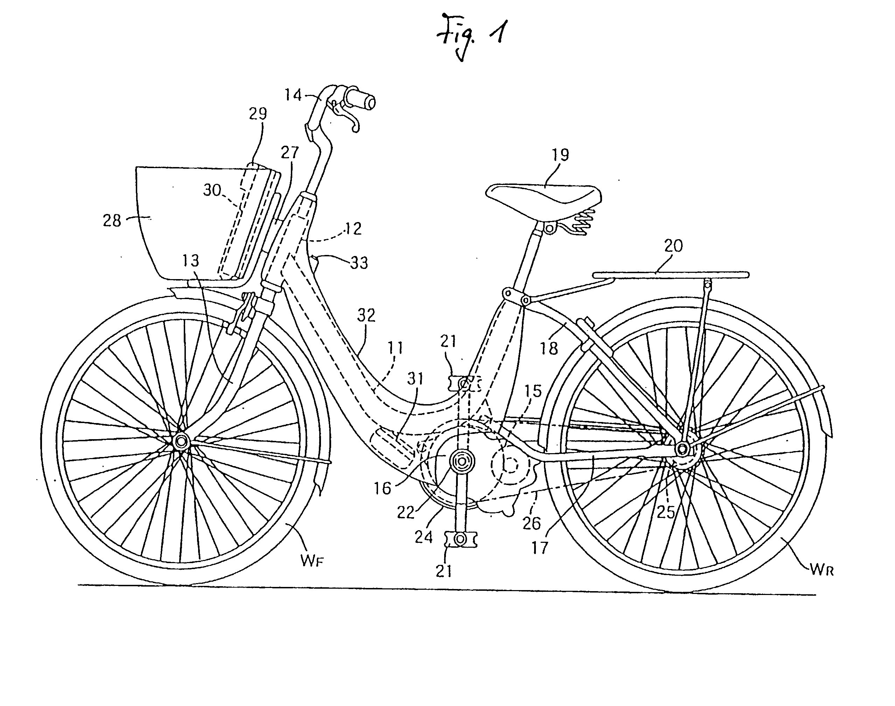

Referring first to FIG. 1, the motor-assisted bicycle includes a body frame 11. A front fork 13 is steerably supported to a head pipe 12 connected to the front end of the body frame 11. A front wheel W_{F} is rotatably supported to the lower ends of the front fork 13. A bar handle 14 is provided at the upper end of the front fork 13. A motor unit 16 having an electric motor 15 is provided at a lower portion of the body frame 11. A pair of right and left rear forks 17 extend obliquely downward from the body frame 11 at a position above a rear portion of the motor unit 16 and extend substantially horizontally at a position behind the motor unit 16. A rear wheel W_{R} is rotatably supported to the rear ends of the rear forks 17. A pair of right and left stays 18 extend between the rear ends of the rear forks 17 and the rear end of the body frame 11. A seat 19 is mounted at a rear portion of the body frame 11 in such a manner that the seat 19 is vertically adjusted in position. A carrier 20 is fixedly located behind the seat 19.

A crankshaft 22 having crank pedals 21 at its opposite ends is rotatably supported to a casing 35 of the motor unit 16. A drive sprocket 24 is provided on the crankshaft 22 so that it can transmit torque from the crankshaft 22 and can also receive an assist force from the motor 15. An endless chain 26 is wrapped between the drive sprocket 24 and a driven sprocket 25 provided on an axle of the rear wheel W_{R}.

A front basket 28 is mounted through a bracket 27 to the head pipe 12. A battery storing case 29 is provided at a rear portion of the front basket 28, and is mounted to the bracket 27. A battery 30 for supplying electric power to the motor 15 is removably stored in the battery storing case 29.

The operation of the motor 15 is controlled by a controller 31 fixedly supported to a lower portion of the body frame 11 before the motor unit 16. The controller 31 controls the operation of the motor 15 according to a depression force by the rider and a vehicle speed.

Most of the body frame 11 is covered with a cover 32. A main switch 33 for supplying electric power from the battery 30 to the controller 31 and the motor 15 is provided at an upper portion of the cover 32.

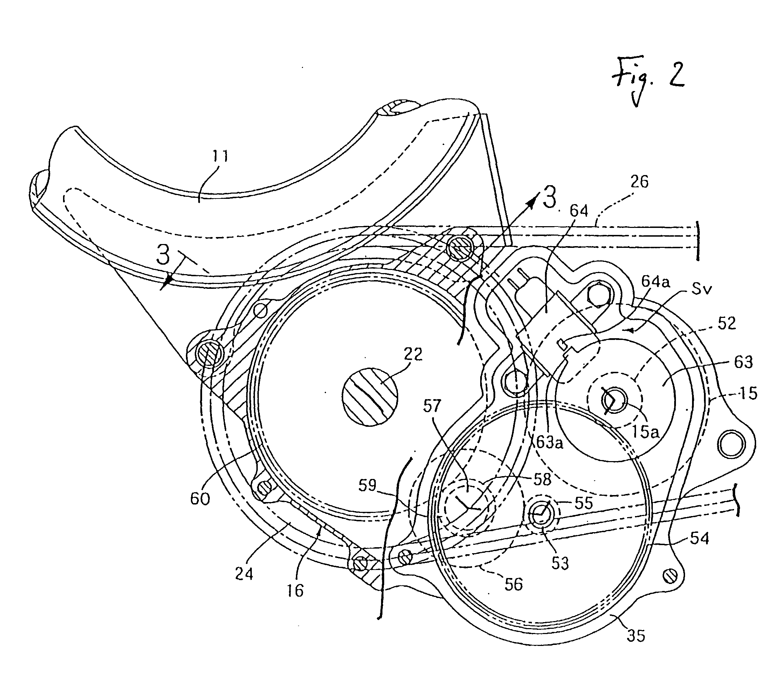

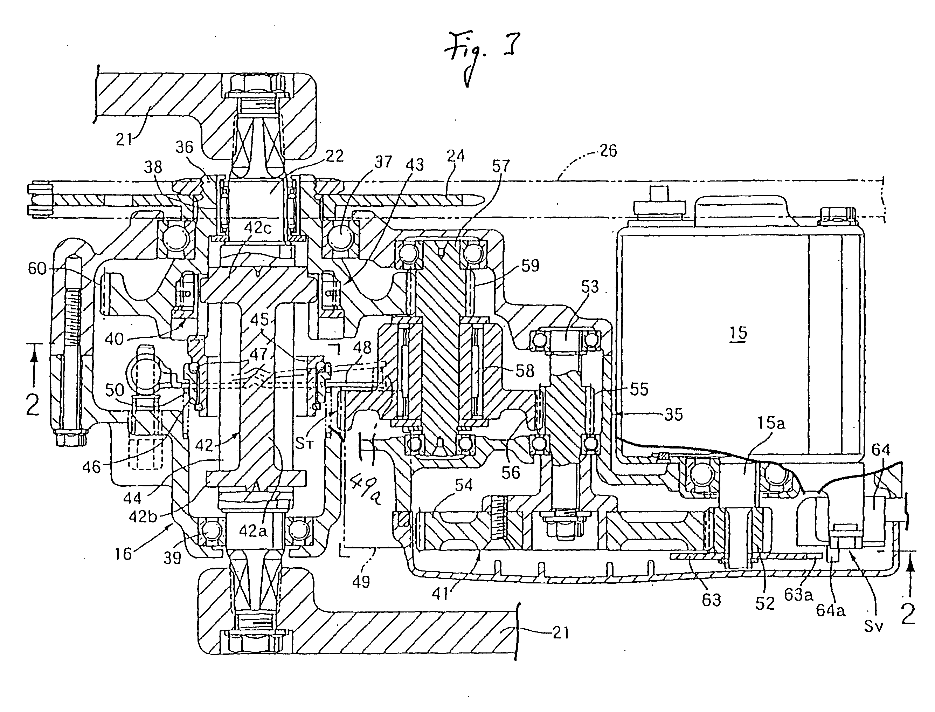

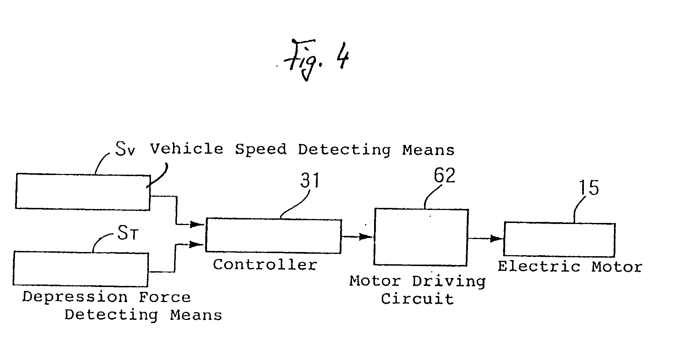

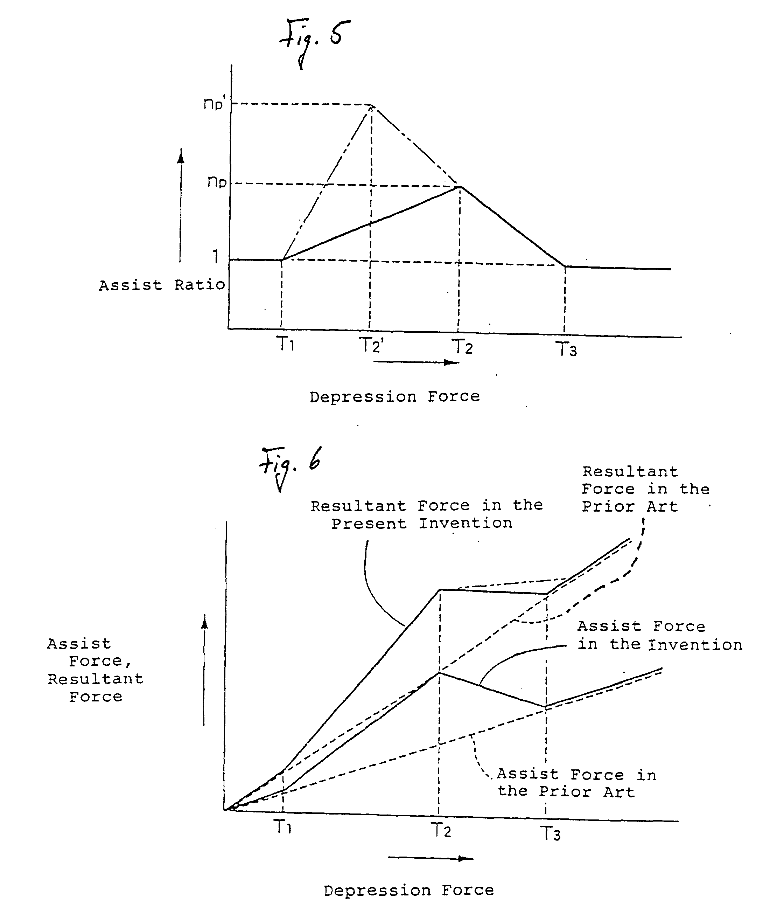

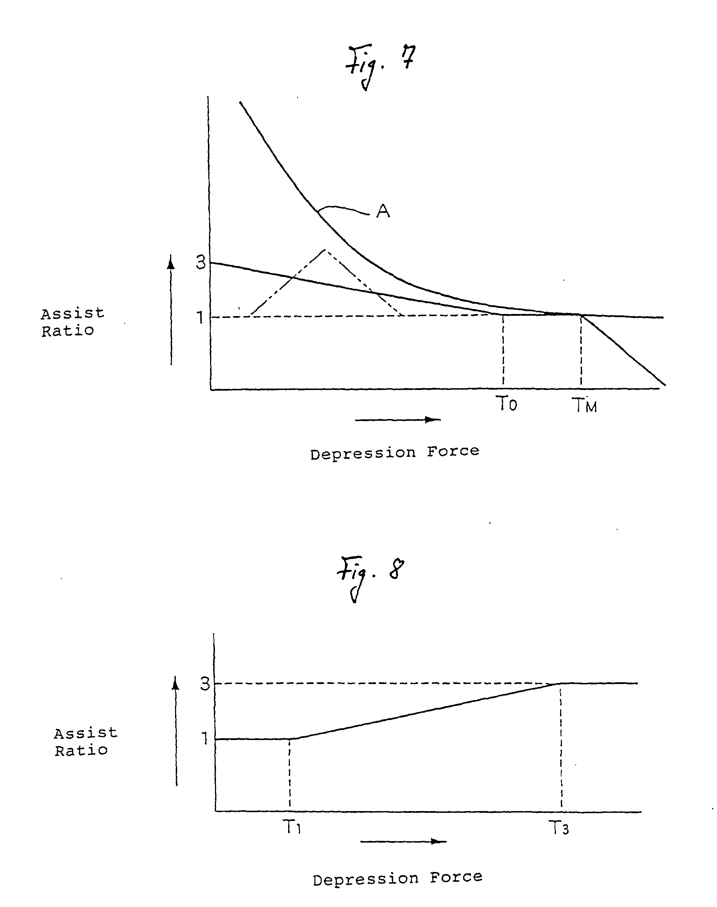

Referring also to FIGS. 2 and 3, the casing 35 of the motor unit 16 is fixedly supported to a lower portion of the body frame 11. A hollow rotating cylinder 36 connected to the drive sprocket 24 is rotatably supported through a ball bearing 37 to a right portion of the casing 35 (an upper portion as viewed in FIG. 3). A right end portion of the crankshaft 22 is supported through a needle bearing 38 to the rotating cylinder 36, and a left end portion of the crankshaft 22 is supported through a ball bearing 39 to a left portion of the casing 35 (a lower portion as viewed in FIG. 3).

A depression force applied to the crank pedals 21 fixed at the opposite ends of the crankshaft 22 is transmitted from the crankshaft 22 through a depression force transmitting system 40 to the drive sprocket 24. An output from the motor 15 mounted on the casing 35 is transmitted through an assist force transmitting system 41 to the drive sprocket 24, so as to assist the depression force applied to the crank pedals 21.

The depression force transmitting system 40 for transmitting the torque of the crankshaft 22 to the drive sprocket 24 is composed of a torsion bar 42 connected to the crankshaft 22 and a first one-way clutch 43 provided between the rotating cylinder 36 and the torsion bar 42.

The crankshaft 22 is formed with an axially extending slit 44. The torsion bar 42 is mounted in the slit 44. The torsion bar 42 has a solid cylindrical shaft portion 42a rotatably engaged in the slit 44, an arm portion 42b formed at a left end of the shaft portion 42a (a lower end as viewed in FIG. 3) so as to project in opposite directions, and another arm portion 42c formed at a right end of the shaft portion 42a (an upper end as viewed in FIG. 3). The shaft portion 42a is twisted according to a depression force input from the crankshaft 22 to the arm portion 42b, thereby transmitting the depression force to the other arm portion 42c.

The first one-way clutch 43 is known in the art. When the crank pedals 21 are depressed to normally rotate the crankshaft 22, a depression force from the crankshaft 22 is transmitted through the torsion bar 42, the first one-way clutch 43, and the rotating cylinder 36 to the drive sprocket 24, whereas when the crank pedals 21 are depressed to reversely rotate the crankshaft 22, the first one-way clutch 43 slips to allow reverse rotation of the crankshaft 22.

An inner slider 45 is supported to the outer circumference of the crankshaft 22 so as to be unrotatable relative thereto and axially movable relative thereto. An outer slider 46 is supported through a plurality of balls 47 to the outer circumference of the inner slider 45 so as to be rotatable relative thereto.

The inner slider 45 is engaged through a cam with a clutch inner ring in the first one-way clutch 43. A detection lever 48 is pivotably supported to the casing 35. An intermediate portion of the detection lever 48 is in contact with the outer slider 46 on the side opposite to the clutch inner ring. A stroke sensor 49 constituting depression force detecting means S_{T} in cooperation with the detection lever 48 is mounted on the casing 35. A front end portion of the detection lever 48 is in contact with a detection element 49a of the stroke sensor 49. A spring 50 is interposed under compression between the detection lever 48 and the casing 35, so that the detection lever 48 is kept in elastic contact with the outer slider 46 by a biasing force of the spring 50. Accordingly, the outer slider 46 and the inner slider 45 are biased toward the clutch inner ring of the first one-way clutch 43.

When the torsion bar 42 is twisted according to the input depression force from the crank pedals 21 to the crankshaft 22, the inner slider 45 slides downward as viewed in FIG. 3 along the axis of the crankshaft 22 against the biasing force of the spring 50, and the detection lever 48 pressed by the outer slider 46 moving with the inner slider 45 swings, thereby pressing the detection element 49a of the stroke sensor 49. The stroke of the detection element 49a is proportional to the amount of twist of the torsion bar 42, i.e., the input depression force from the crank pedals 21. Thus, the input depression force is detected by the depression force detecting means S_{T}.

The assist force transmitting system 41 for transmitting the power of the motor 15 to the drive sprocket 24 includes a drive gear 52 fixed to a rotating shaft 15a of the motor 15, a first intermediate gear 54 fixed to one end of a first idle shaft 53 parallel to the rotating shaft 15a and meshing with the drive gear 52, a second intermediate gear 55 formed integrally with the first idle shaft 53, a third intermediate gear 56 meshing with the second intermediate gear 55, a second idle shaft 57 coaxial with the third intermediate gear 56, a second one-way clutch 58 provided between the third intermediate gear 56 and the second idle shaft 57, a fourth intermediate gear 59 formed integrally with the second idle shaft 57, and a driven gear 60 formed integrally with the rotating cylinder 36 to which the drive sprocket 24 is connected and meshing with the fourth intermediate gear 59.

In the assist force transmitting system 41 as mentioned above, the torque generated by the operation of the motor 15 is transmitted to the drive sprocket 24 with a rotating speed reduced. When the operation of the motor 15 is stopped, the second one-way clutch 58 operates to permit idling of the second idle shaft 57, thereby allowing rotation of the drive sprocket 24 by the depression force applied to the crank pedals 21.

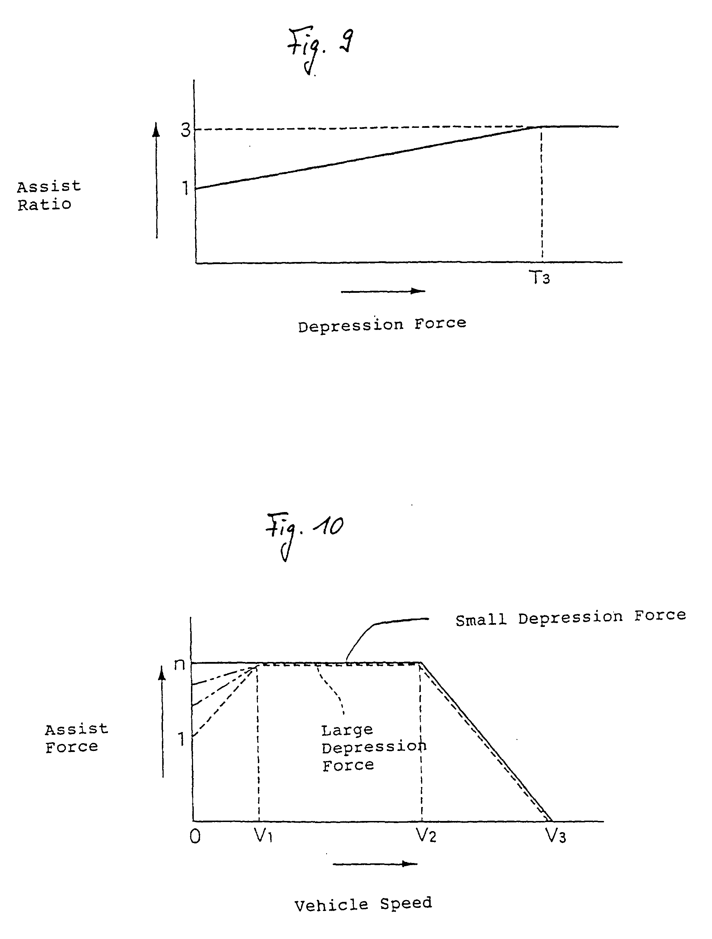

Referring to FIG. 4, a motor driving circuit 62 for driving the electric motor 15 is controlled by the controller 31. Detected values from the depression force detecting means S_{T} and vehicle speed detecting means S_{V} are input into the controller 31. The controller 31 outputs a signal for controlling the operation of the motor 15 according to the detected values from these detecting means S_{T} and S_{V}.

The vehicle speed detecting means S_{V} functions to detect a rotating speed of the motor 15 representing a bicycle speed in a power assisted condition by the motor 15. As shown in FIGS. 2 and 3, the vehicle speed detecting means S_{V} is composed of a reluctor 63 and an electromagnetic pickup coil type sensor 64. The reluctor 63 has a projection 63a at its outer circumference, and is fixed to the rotating shaft 15a of the motor 15. The sensor 64 has a detecting portion 64a adapted to face the projection 63a in proximity thereto, and is fixed to the casing 35.

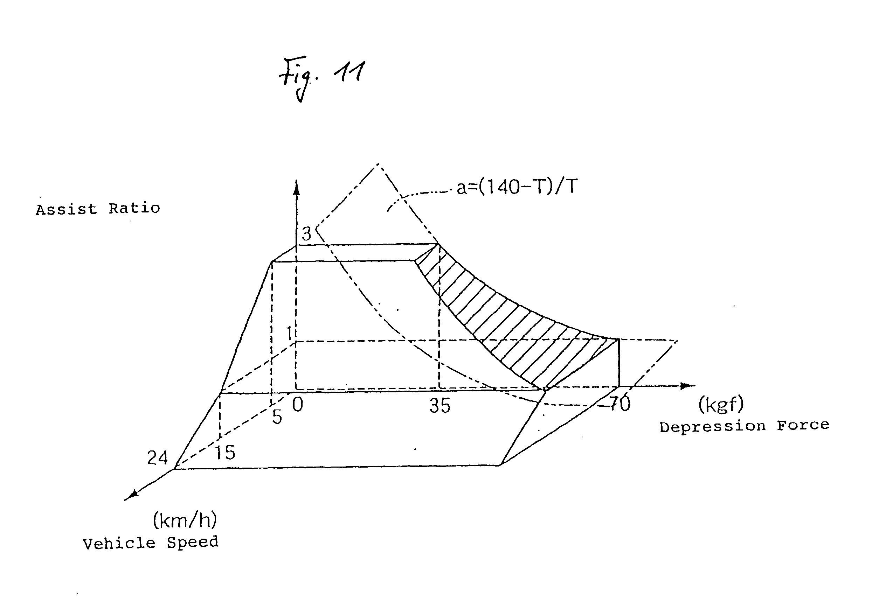

In the controller 31, an assist ratio defined as the ratio (assist force/depression force) of an assist force by the motor 15 to a depression force by the rider is preliminarily set as shown in FIG. 5. More specifically, when the depression force detected by the depression force detecting means S_{T} is less than or equal to a first set force T₁, e.g., 20 kgf, or when the depression force detected by the depression force detecting means S_{T} is greater than or equal to a third set force T₃, e.g., 70 kgf, the assist ratio is set to "1". When the depression force is greater than the first set force T₁ and less than the third set force T₃, the assist ratio is set to a value greater than 1 and changed according to the depression force.

At a second set force T₂ or T₂' falling between the first set force T₁ and the third set force T₃, the assist ratio becomes a peak value nₚ or nₚ'. The second set force T₂ or T₂' is arbitrarily set according to a maximum depression force that can be developed by the rider with a weak depression force, such as a female or old person. The peak value nₚ or nₚ' is set so that the resultant force of the depression force and the assist force becomes a maximum resultant force of 140 kgf for a maximum depression force of 70 kgf assumed to be obtainable by the rider in general in the case that the assist ratio is "1". In the case that T₂ is 50 kgf, nₚ is set to "1.8", for example, or in the case that T₂' is 35 kgf, nₚ' is set to "3", for example.

FIG. 6 shows the resultant force of the depression force and the assist force obtained by setting the assist ratio as shown in FIG. 5. In FIG. 6, the broken lines show the prior art wherein the assist ratio is constant, so that the assist force is linearly changed according to the depression force and accordingly the resultant force is also linearly changed according to the depression force. In contrast, the solid lines show the present invention wherein the assist ratio set greater than "1" in a given depression force range (greater than the first set force T₁ and less than the third set force T₃) is changed according to the depression force. As shown by the solid lines, the assist force and the resultant force can be increased as required. In the depression force range of T₂ to T₃, it is preferable that the resultant force is substantially constant irrespective of an increase in the depression force as shown by the solid line, or is slightly increased with an increase in the depression force as shown by the phantom line.

The operation of the first preferred embodiment will now be described. When the depression force detected by the depression force detecting means S_{T} is less than or equal to the first set force T₁, or when the depression force is greater than or equal to the third set force T₃, the assist ratio is set to "1". Accordingly, in a normal running condition where a large depression force is not required to depress the pedals 21, or during running by the rider capable of developing a strong depression force, the assist force is controlled in a manner similar to that in the prior art, thereby preventing excessive high-speed running of the bicycle to allow running with a proper driving force. Further, in the case that the rider with a weak depression force such as a female or old person develops a maximum depression force, the operation of the motor 15 is controlled so that a maximum assist force is developed. Accordingly, the rider with a weak depression force can obtain a large resultant force similar to that obtained by the rider with a strong depression force, so that the rider with a weak depression force can also easily pedal the bicycle on an upward slope. Further, when the depression force is fixed, the assist force is unchanged, so that the rider can pedal the bicycle without feeling any discomfort.

FIG. 7 shows a second preferred embodiment of the present invention. In the second preferred embodiment, the assist ratio is set according to the depression force in the following manner. When the depression force detected by the depression force detecting means S_{T} is less than a set force T₀, the assist ratio set greater than "1" is gradually decreased with an increase in the depression force. When the depression force is in the range from the set force T₀ to a maximum set force T_{M} greater than the set force T₀, the assist ratio is set to "1". When the depression force is greater than the maximum set force T_{M}, the assist ratio is gradually decreased from "1" with an increase in the depression force. The set force T₀ is present to 60 kgf, for example, which substantially corresponds to the weight of an average person. Further, the maximum set force T_{M} is preset to 70 kgf, for example, which corresponds to a half of 140 kgf assumed as a maximum resultant force for a maximum depression force of 70 kgf that can be developed by the rider in general.

Furthermore, the assist ratio is changed according to the depression force so as not to exceed a curve A. The curve A shows an assist ratio where the resultant force as the sum of the depression force and the assist force is coincident with the maximum depression force obtainable by the rider in general. More specifically, letting a and T denote the assist ratio and the depression force, respectively, and assuming that the maximum resultant force is 140 kgf, the curve A is expressed by {a = (140 - T)/T}.

According to the second preferred embodiment, the rider with a relatively weak depression force can obtain a larger assist force for a smaller depression force, thereby obtaining substantially the same resultant force for every rider. Further, the rider with a relatively strong depression force can obtain an assist force equal to the depression force, thereby preventing an excessive increase in running speed. Further, the rider with an extremely strong depression force is allowed to obtain an assist force smaller than the depression force, thereby avoiding an excessive increase in resultant force to obtain a proper resultant force fit for the bicycle. Thus, the assist force by the motor 15 can be controlled so as to fit for the bicycle. In addition, when the depression force is fixed, the assist force is unchanged as similar to the first preferred embodiment.

As a modification of the second preferred embodiment, the assist ratio may be set so that it becomes maximum at a specific depression force in the range less than the set force T₀ as shown by the phantom line in FIG. 7 rather than linearly changing the assist ratio according to the depression force.

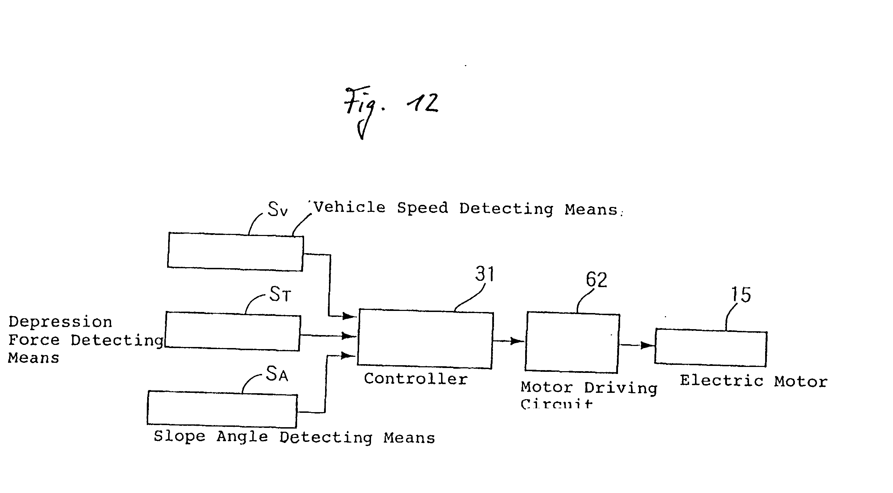

FIG. 8 shows a third preferred embodiment of the present invention. In the third preferred embodiment, the assist ratio is set according to the depression force in the following manner. When the depression force is less than or equal to the first set force T₁, the assist ratio is set to "1". When the depression force is greater than or equal to the third set value T₃, the assist ratio is set to "3". When the depression force is greater than the first set force T₁ and less than the third set force T₃, the assist ratio is linearly increased from "1" to "3" with an increase in the depression force.

According to the third preferred embodiment, the assist ratio can be increased for the rider with a large depression force, thereby obtaining a large assist force.

FIG. 9 shows a fourth preferred embodiment of the present invention. In the fourth preferred embodiment, the assist ratio is set according to the depression force in such a manner that when the depression force is greater than or equal to the third set force T₃, the assist ratio is set to "3", whereas when the depression force is less than the third set force T₃, the assist ratio is linearly increased from "1" to "3" with an increase in the depression force.

FIG. 10 shows a fifth preferred embodiment of the present invention. In the fifth preferred embodiment, the assist ratio is set according to the depression force and the vehicle speed. In FIG. 10, the broken line shows a case where the depression force is large, and the solid line shows a case where the depression force is small. In low- and medium-speed regions less than or equal to a second set speed V₂ (e.g., 15 km/h), the assist ratio is set to n (> 1) irrespective of the magnitude of the depression force. In a high-speed region exceeding the second set speed V₂, the assist ratio is gradually decreased with an increase in the vehicle speed until reaching "0" at a third set speed V₃ (e.g., 24 km/h).

By setting the assist ratio to "n" greater than "1" as mentioned above, every rider can obtain a large assist force, thereby easily pedaling the bicycle.

If the assist ratio is set large during low-speed running with a large depression force, a large electric current flows in the motor 15 to possibly cause quick consumption of the battery or overheating of the motor 15. To cope with such a problem, when the depression force is large during running at low speeds less than or equal to a first set speed V₁ (e.g., 5 km/h) less than the second set speed V₂, the assist ratio is gradually decreased from "n" to "1" with a decrease in the vehicle speed, whereas when the depression force is small during running in this low-speed region, the assist ratio is set to "n". As shown by the phantom lines in FIG. 10, the rate of decrease in the assist ratio with a decrease in the vehicle speed in this low-speed region is increased with an increase in the depression force.

According to the fifth preferred embodiment, consumption of the battery and overheating of the motor 15 can be prevented. Furthermore, since the assist ratio is set relatively large also at starting the bicycle, drift at starting can be eliminated to ensure smooth starting. In addition, even when a strong depression force is applied at starting, an excessive assist force can be prevented from being exerted to thereby prevent rapid starting.

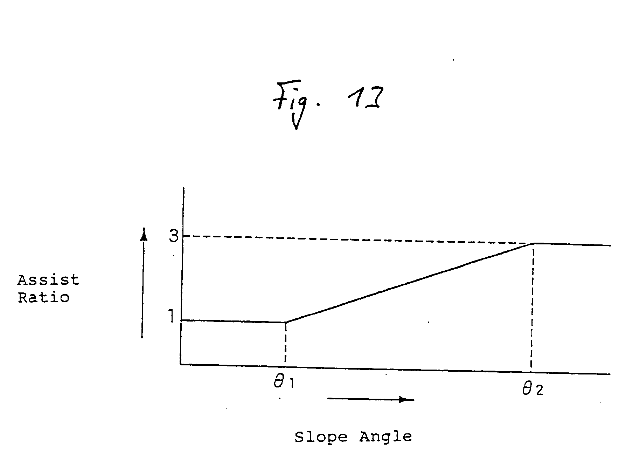

FIG. 11 shows a sixth preferred embodiment of the present invention. In the sixth preferred embodiment, the assist ratio is set on a three-dimensional map determined by the depression force and the vehicle speed. Basically, in the depression force range of 0 kgf to 70 kgf, the assist ratio is set according to the vehicle speed in the following manner. That is, when the vehicle speed is less than or equal to 5 km/h, for example, the assist ratio is set to "3". When the vehicle speed is in the range of 5 km/h to 15 km/h, for example, the assist ratio is linearly changed from "3" to "1" with an increase in the vehicle speed. When the vehicle speed is in the range of 15 km/h to 24 km/h, for example, the assist ratio is linearly changed from "1" to "0" with an increase in the vehicle speed. Particularly in the depression force range of 35 kgf, for example, to 70 kgf, the assist ratio above the plane expressed by {a = (140 - T)/T} (the plane shown by the phantom line) is not obtainable where a and T denote the assist ratio and the depression force, respectively, and the maximum resultant force is assumed to be 140 kgf. Further, when the depression force is greater than 70 kgf, for example, the assist ratio becomes "0".

According to the sixth preferred embodiment, the assist ratio is set on the three-dimensional map determined by the depression force and the vehicle speed. Accordingly, the assist ratio can be smoothly changed with changes in the depression force and the vehicle speed, so that the rider can feel a linear change in the assist force to obtain a good drivability.

FIGS. 1 to 3 and FIGS. 12 to 13 show a seventh preferred embodiment of the present invention, in which FIGS. 1 to 3 are such described as above; FIG. 12 is a block diagram showing the configuration of a control device for an electric motor; and FIG. 13 is a graph showing an assist ratio in relation to a slope angle.

Referring to FIG. 12, a motor driving circuit 62 for driving the electric motor 15 is controlled by the controller 31. Detected values from the depression force detecting means S_{T}, vehicle speed detecting means S_{V}, and slope angle detecting means S_{A} are input into the controller 31. The controller 31 outputs a signal for controlling the operation of the motor 15 according to the detected values from these detecting means S_{T}, S_{V}, and S_{A}.

The vehicle speed detecting means S_{V} functions to detect a rotating speed of the motor 15 representing a bicycle speed in a power assisted condition by the motor 15. As shown in FIGS. 2 and 3, the vehicle speed detecting means S_{V} is composed of a reluctor 63 and an electromagnetic pickup coil type sensor 64. The reluctor 63 has a projection 63a at its outer circumference, and is fixed to the rotating shaft 15a of the motor 15. The sensor 64 has a detecting portion 64a adapted to face the projection 63a in proximity thereto, and is fixed to the casing 35.

The slope angle detecting means S_{A} functions to detect a slope angle of a road surface on which the bicycle is running. The slope angle detecting means S_{A} is mounted preferably on the body frame 11 in the vicinity of the crankshaft 22 so as not to be much affected by the behavior of a vehicle body, or mounted preferably on the body frame 11 in the vicinity of the head pipe 12 so as to quickly detect a change in the slope angle.

In the case that the detected value from the vehicle speed detecting means S_{V} is a value corresponding to a vehicle speed in low- and medium-speed regions, an assist ratio defined as the ratio (assist force / depression force) of an assist force by the motor 15 to a depression force by the rider is preliminarily set according to the detected values from the slope angle detecting means S_{A}, i.e., the slope angle detected by the detecting means S_{A} as shown in FIG. 13. More specifically, when the slope angle detected by the slope angle detecting means S_{A} is less than a first set angle θ₁, e.g., 2 degrees, the assist ratio is set to "1". When the slope angle detected by the slope angle detecting means S_{A} is greater than a second set angle θ₂ which is greater than the first set angle θ₁, the assist ratio is set to "3". When the slope angle detected by the slope angle detecting means S_{A} is greater than or equal to the first set angle θ₁ and less than or equal to the second set angle θ₂, the assist ratio is set so as to linearly increase from "1" to "3".

The operation of the seventh preferred embodiment will now be described. When the slope angle detected by the slope angle detecting means S_{A} becomes greater than or equal to the first set angle θ₁ during running on an upward slope, the assist ratio is gradually increased from "1" according to the slope angle, so that the assist force by the motor 15 can be increased according to the depression force by the rider irrespective of a vehicle running speed. Accordingly, even when the depression force that can be developed by the rider is weak, the rider can easily pedal the bicycle without feeling any discomfort.

Furthermore, when the slope angle detected by the slope angle detecting means S_{A} becomes greater than the second set angle θ₂ which is greater than the first set angle θ₁, the assist ratio is set to "3", thereby preventing an excessive increase in the assist ratio with an increase in the slope angle. Accordingly, power consumption of the battery can be reduced, and a required amount of assist force can be added to the depression force to thereby allow comfortable running on an upward slope.

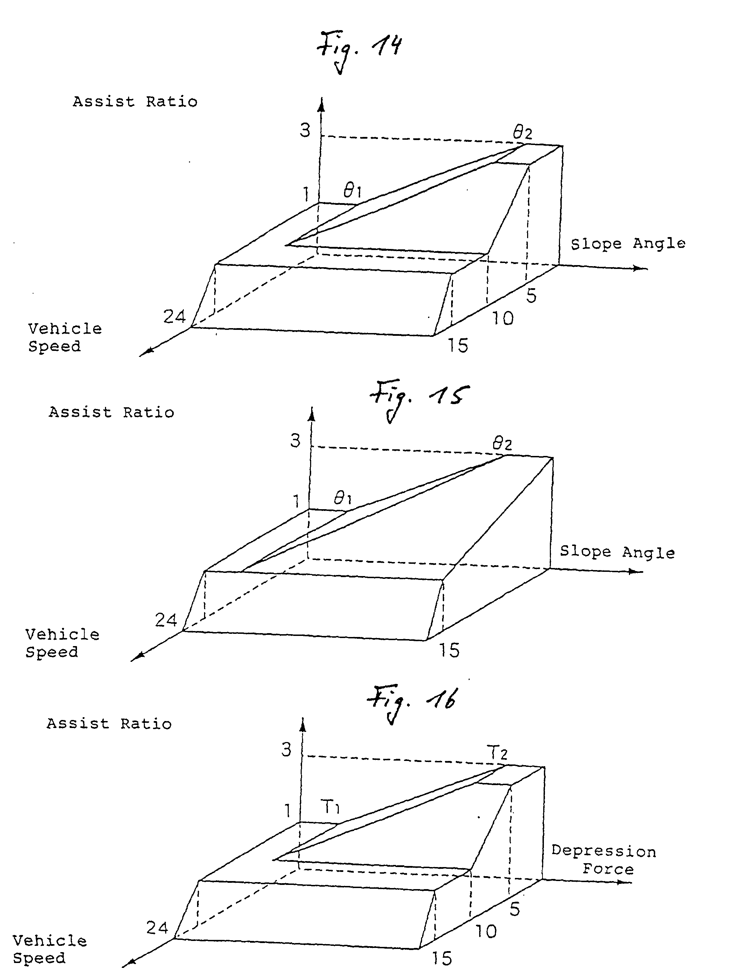

FIG. 14 shows a eighth preferred embodiment of the present invention. In the second preferred embodiment, the assist ratio is set according to the vehicle speed detected by the vehicle speed detecting means S_{V} and the slope angle detected by the slope angle detecting means S_{A}. More specifically, when the vehicle speed detected by the vehicle speed detecting means S_{V} is less than or equal to a set speed, e.g., 10 km/h, and the slope angle detected by the slope angle detecting means S_{A} is greater than or equal to a first set angle θ₁, e.g., 2 degrees, the assist ratio is set so as to gradually increase from "1" with a decrease in the vehicle speed and an increase in the slope angle. In particular, when the vehicle speed becomes less than or equal to 5 km/h, for example, and the slope angle becomes greater than or equal to a second set angle θ₂ which is greater than the first set angle θ₁, the assist ratio is set to "3". Further, when the vehicle speed is greater than 10 km/h and less than or equal to 15 km/h, for example, or when the vehicle speed is less than or equal to 10 km/h and the slope angle is less than the first set angle θ₁, the assist ratio is set to "1". Further, when the vehicle speed is in a high-speed region greater than 15 km/h, for example, the assist ratio is set so as to gradually decrease from "1" with an increase in the vehicle speed. In particular, when the vehicle speed reaches 24 km/h, for example, power assisting by the motor 15 is stopped.

According to the eighth preferred embodiment, during running on a level road the assist ratio is set to "1" or less, thereby avoiding an undue increase in load to the motor 15 to extend battery life and also avoiding excessive acceleration on the level road. Furthermore, during running on an upward slope with a slope angle greater than or equal to the first set angle θ₁ at low speeds less than or equal to 10 km/h, for example, the assist ratio is set greater than "1", so that the rider can easily pedal the bicycle with a weak depression force without feeling any discomfort.

FIG. 15 shows a ninth preferred embodiment of the present invention. The ninth preferred embodiment is similar to the eighth preferred embodiment shown in FIG. 14 except that the rate of decrease in the assist ratio with an increase in the vehicle speed is smaller than that in the eighth preferred embodiment. Also according to the ninth preferred embodiment, an effect similar to that by the eighth preferred embodiment can be obtained.

FIG. 16 shows a tenth preferred embodiment of the present invention. In the tenth preferred embodiment, the assist ratio is set according to the vehicle speed detected by the vehicle speed detecting means S_{V} and the depression force detected by the depression force detecting means S_{T}. More specifically, when the vehicle speed detected by the vehicle speed detecting means S_{V} is less than or equal to a set speed, e.g., 10 km/h, and the depression force detected by the depression force detecting means S_{T} is greater than or equal to a first set force T₁, the assist ratio is set so as to gradually increase from "1" with a decrease in the vehicle speed and an increase in the slope angle. In particular, when the vehicle speed becomes less than or equal to 5 km/h, for example, and the depression force becomes greater than or equal to a second depression force T₂ which is greater than the first depression force T₁, the assist ratio is set to "3". Further, when the vehicle speed is greater than 10 km/h and less than or equal to 15 km/h, for example, or when the vehicle speed is less than or equal to 10 km/h and the depression force is less than the first set force T₁, the assist ratio is set to "1". Further, when the vehicle speed is in a high-speed region greater than 15 km/h, for example, the assist ratio is set so as to gradually decrease from "1" with an increase in the vehicle speed. In particular, when the vehicle speed reaches 24 km/h, for example, power assisting by the motor 15 is stopped.

According to the tenth preferred embodiment, during running on a level road the assist ratio is set to "1" or less, thereby avoiding an undue increase in load to the motor 15 to extend battery life and also avoiding excessive acceleration on the level road. Furthermore, during running on an upward slope with a depression force greater than or equal to the first set force T₁ at low speeds less than or equal to 10 km/h, for example, the assist ratio is set greater than "1", so that the rider can easily pedal the bicycle with a weak depression force without feeling any discomfort.

Having thus described specific preferred embodiments of the present invention, it should be noted that the present invention is not limited to the above preferred embodiments, but various design modifications may be made without departing from the scope of the present invention as defined by the appended Claims.

According to the invention as defined in Claim 1, the assist ratio is changed according to the depression force, so that an assist force according to the depression force can be obtained. Further, when the depression force is fixed, the assist force is unchanged to thereby allow comfort pedaling.

According to the invention as defined in Claim 2, a large assist force is exerted for the rider with a weak depression force, and an excessive increase in the assist force is prevented for the rider with a strong depression force. Further, when the depression force is fixed, the assist force is unchanged.

According to the invention as defined in Claim 3, the assist force can be increased according to the depression force irrespective of the pedaling capability of the rider. Further, when the depression force is fixed, the assist force is unchanged.

According to the invention as defined in Claim 4, an excessive increase in resultant force as the sum of the depression force and the assist force can be avoided to thereby obtain a proper resultant force fit for the bicycle. Accordingly, the assist force by the electric motor can be made fit for the bicycle.

According to the invention as defined in Claim 5, the assist ratio can be increased in the low- and medium-speed regions to thereby allow easy pedaling. Further, when the depression force is large in the low-speed region, the assist ratio is set relatively small to thereby prevent battery consumption and overheating of the electric motor and also prevent rapid starting of the bicycle.

According to the invention as defined in claim 7, the assist force can be increased according to the depression force irrespective of the vehicle speed, so that the rider can easily pedal the bicycle with a weak depression force without feeling any discomfort.

According to the invention as defined in claim 8, when the vehicle speed becomes less than or equal to the set speed and the slope angle becomes greater than or equal to the set angle during running on an upward slope, the assist ratio is set to a value greater than 1. Accordingly, the rider can easily pedal the bicycle with a weak depression force without feeling any discomfort. Further, during running on a level road, the assist ratio is set to a value less than or equal to 1. Accordingly, an undue increase in load to the electric motor can be avoided to thereby extend battery life, and excessive acceleration on the level road can also be avoided.

According to the invention as defined in claim 6, when the vehicle speed becomes less than or equal to the set speed and the depression force becomes greater than or equal to the set force during running on an upward slope, the assist ratio is set to a value greater than 1. Accordingly, an undue increase in load to the electric motor can be avoided to thereby extend battery life, and excessive acceleration on the level road can also be avoided.

As a summary, the invention aims to obtain an assist force according to a depression force and fix the assist force for a fixed depression force to allow comfort pedaling and to allow easy pedaling on an upward slope with a weak depression force applied to the pedals without feeling any discomfort in a motor-assisted bicycle having depression force detecting means for detecting a depression force by the rider and an electric motor capable of exerting an assist force according to the depression force detected by the depression force detecting means, wherein an assist ratio defined as the ratio of the assist force by the electric motor to the depression force by the rider can be changed.

The operation of the electric motor is controlled by a controller so that an assist ratio defined as the ratio of an assist force by the electric motor to a depression force by the rider is changed according to the depression force detected by the depression force detecting means and also the operation of the electric motor is controlled by a controller so that when a detected value from slope angle detecting means for detecting a slope angle of a road surface on which the bicycle is running is greater than or equal to a set angle, the assist ratio is increased from 1 with an increase in the detected value.

## Claims

1. A motor-assisted bicycle having depression force detecting means (S_{T}) for detecting a depression force by a rider, and an electric motor (15) capable of exerting an assist force according to the depression force detected by said depression force detecting means (S_{T}), wherein an assist force control device is provided comprising a controller (31) for controlling the operation of said electric motor (15),
**characterized in that** said controller (31) controls the operation of said electric motor (15) so that an assist ratio (assist force / depression force) defined as the ratio of the assist force by said electric motor (15) to the depression force by said rider is increased in a predetermined range of the depression force detected by said depression force detecting means (S_{T}).

2. A motor-assisted bicycle according to Claim 1, wherein said controller (31) controls the operation of said electric motor (15) so that when the depression force detected by said depression force detecting means (S_{T}) is greater than or equal to a set force, said assist ratio is set to 1, whereas when the depression force detected by said depression force detecting means (S_{T}) is less than said set force, said assist ratio is set to a value greater than 1.

3. A motor-assisted bicycle according to Claim 1, wherein said controller (31) controls the operation of said electric motor (15) so that said assist ratio is gradually increased from 1 with an increase in the depression force detected by said depression force detecting means (S_{T}).

4. A motor-assisted bicycle according to Claim 2, wherein said controller (31) controls the operation of said electric motor (15) so that when the depression force detected by said depression force detecting means (S_{T}) is greater than or equal to a maximum set force greater than said set force, said assist ratio is set to a value less than 1.

5. A motor-assisted bicycle according to Claim 1, further comprising vehicle speed detecting means (S_{V}) for detecting a vehicle speed of said bicycle, wherein said controller (31) controls the operation of said electric motor (15) so that when the vehicle speed detected by said vehicle speed detecting means (S_{V}) is in low- and medium-speed regions less than or equal to a set speed, said assist ratio is set to a value greater than or equal to 1, whereas when the vehicle speed detected by said vehicle speed detecting means (S_{V}) is in a low-speed region less than or equal to another set speed less than said set speed, said assist ratio is decreased with an increase in the depression force detected by said depression force detecting means (S_{T}).

6. A motor-assisted bicycle according to Claim 1, further comprising vehicle speed detecting means (S_{V}) for detecting a vehicle speed of said bicycle, wherein said controller (31) controls the operation of said electric motor (15)so that in a first condition where the vehicle speed detected by said vehicle speed detecting means (S_{V}) is less than or equal toa set speed and the depression force detected by said depression force detecting means (S_{T}) is greater than or equal to a set force, said assist ratio is set to a value greater than 1, whereas in any conditions other than said first condition, said assist ratio is set to a value less than or equal to 1.

7. A motor-assisted bicycle according to Claim 1, further comprising slope angle detecting means (S_{A}) for detecting a slope angle of a road surface on which said bicycle is running, wherein said controller (31) controls the operation of said electric motor (15) so that when the slope angle detected by said slope angle detecting means (S_{A}) is greater than or equal to a set angle, said assist ratio is increased from 1 with an increase in the slope angle.

8. A motor-assisted bicycle according to Claim 1, further comprising slope angle detecting means (S_{A}) for detecting a slope angle of a road surface on which said bicycle is running, vehicle speed detecting means (S_{V}) for detecting a vehicle speed of said bicycle, wherein said controller (31) controls the operation of said electric motor (15) so that in a first condition where the vehicle speed detected by said vehicle speed detecting means (S_{V}) is less than or equal to a set speed and the slope angle detected by said slope angle detecting means (S_{A}) is greater than or equal to a set angle, said assist ratio is set to a value greater than 1, whereas in any conditions other than said first condition, said assist ratio is set to a value less than or equal to 1.

## Patentansprüche

1. Motorunterstütztes Fahrrad mit einem Tretkrafterfassungsmittel (S_{T}) zur Erfassung einer Tretkraft eines Fahrers und einem Elektromotor (15), welcher eine Unterstützungskraft gemäß der von dem Tretkrafterfassungsmittel (S_{T}) erfassten Tretkraft ausüben kann, wobei eine Unterstützungskraftsteuer/regeleinrichtung vorgesehen ist, welche eine Steuer/Regeleinrichtung (31) zur Steuerung/Regelung des Betriebs des Elektromotors (15) umfasst,
**dadurch gekennzeichnet, dass** die Steuer/Regeleinrichtung (31) den Betrieb des Elektromotors (15) so steuert/regelt, dass ein Unterstützungsverhältnis (Unterstützungskraft/Tretkraft), welches als das Verhältnis der Unterstützungskraft durch den Elektromotor (15) zu der Tretkraft von dem Fahrer definiert ist, in einem vorbestimmten Bereich der von dem Tretkrafterfassungsmittel (S_{T}) erfassten Tretkraft erhöht wird.

2. Motorunterstütztes Fahrrad gemäß Anspruch 1, wobei die Steuer/Regeleinrichtung (31) den Betrieb des Elektromotors (15) so steuert/regelt, dass dann, wenn die von dem Tretkrafterfassungsmittel (S_{T}) erfasste Tretkraft größer oder gleich einer eingestellten Kraft ist, das Unterstützungsverhältnis auf 1 eingestellt wird, während dann, wenn die von dem Tretkrafterfassungsmittel (S_{T}) erfasste Tretkraft kleiner als die eingestellte Kraft ist, das Unterstützungsverhältnis auf einen Wert größer als 1 eingestellt wird.

3. Motorunterstütztes Fahrrad gemäß Anspruch 1, wobei die Steuer/Regeleinrichtung (31) den Betrieb des Elektromotors (15) so steuert/regelt, dass das Unterstützungsverhältnis mit einer Zunahme der von dem Tretkrafterfassungsmittel (S_{T}) erfassten Tretkraft allmählich von 1 erhöht wird.

4. Motorunterstütztes Fahrrad gemäß Anspruch 2, wobei die Steuer/Regeleinrichtung (31) den Betrieb des Elektromotors (15) so steuert/regelt, dass dann, wenn die von dem Tretkrafterfassungsmittel (S_{T}) erfasste Tretkraft größer oder gleich einer eingestellten Maximalkraft ist, welche größer als die eingestellte Kraft ist, das Unterstützungsverhältnis auf einen Wert kleiner als 1 eingestellt wird.

5. Motorunterstütztes Fahrrad gemäß Anspruch 1, ferner umfassend ein Fahrzeuggeschwindigkeitserfassungsmittel (S_{V}) zur Erfassung einer Fahrzeuggeschwindigkeit des Fahrrads, wobei die Steuer/Regeleinrichtung (31) den Betrieb des Elektromotors (15) so steuert/regelt, dass dann, wenn die von dem Fahrzeuggeschwindigkeitserfassungsmittel (S_{V}) erfasste Fahrzeuggeschwindigkeit in niederen und mittleren Geschwindigkeitsbereichen liegt, welche kleiner oder gleich einer eingestellten Geschwindigkeit sind, das Unterstützungsverhältnis auf einen Wert größer oder gleich 1 eingestellt wird, während dann, wenn die von dem Fahrzeuggeschwindigkeitserfassungsmittel (S_{V}) erfasste Fahrzeuggeschwindigkeit in einem niedrigen Geschwindigkeitsbereich liegt, welcher kleiner oder gleich einer anderen eingestellten Geschwindigkeit ist, welche kleiner als die eingestellte Geschwindigkeit liegt, das Unterstützungsverhältnis mit einer Erhöhung der von dem Tretkrafterfassungsmittel (S_{T}) erfassten Tretkraft verringert wird.

6. Motorunterstütztes Fahrrad gemäß Anspruch 1, ferner umfassend ein Fahrzeuggeschwindigkeitserfassungsmittel (S_{V}) zur Erfassung einer Fahrzeuggeschwindigkeit des Fahrrads, wobei die Steuer/Regeleinrichtung (31) den Betrieb des Elektromotors (15) so steuert/regelt, dass in einem ersten Zustand, in dem die von dem Fahrzeuggeschwindigkeitserfassungsmittel (S_{V}) erfasste Fahrzeuggeschwindigkeit kleiner oder gleich einer eingestellten Geschwindigkeit ist und die von dem Tretkrafterfassungsmittel (S_{T}) erfasste Tretkraft größer oder gleich einer eingestellten Kraft ist, das Unterstützungsverhältnis auf einen Wert größer als 1 eingestellt wird, wohingegen in jedem anderen Zustand als dem ersten Zustand das Unterstützungsverhältnis auf einen Wert kleiner oder gleich 1 eingestellt wird.

7. Motorunterstütztes Fahrrad gemäß Anspruch 1, ferner umfassend ein Neigungswinkelerfassungsmittel (S_{A}) zur Erfassung eines Neigungswinkels einer Straßenoberfläche, auf welcher das Fahrrad fährt, wobei die Steuer/Regeleinrichtung (31) den Betrieb des Elektromotors (15) so steuert/regelt, dass dann, wenn der von dem Neigungswinkelerfassungsmittel (S_{A}) erfasste Neigungswinkel größer oder gleich einem eingestellten Winkel ist, das Unterstützungsverhältnis mit einer Zunahme des Neigungswinkels von 1 erhöht wird.

8. Motorunterstütztes Fahrrad gemäß Anspruch 1, ferner umfassend ein Neigungswinkelerfassungsmittel (S_{A}) zur Erfassung eines Neigungswinkels einer Straßenoberfläche, auf welcher das Fahrrad fährt, ein Fahrzeuggeschwindigkeitserfassungsmittel (S_{V}) zur Erfassung einer Fahrzeuggeschwindigkeit des Fahrrads, wobei die Steuer/Regeleinrichtung (31) den Betrieb des Elektromotors (15) so steuert/regelt, dass in einem ersten Zustand, in dem die von dem Fahrzeuggeschwindigkeitserfassungsmittel (S_{V}) erfasste Fahrzeuggeschwindigkeit kleiner oder gleich einer eingestellten Geschwindigkeit ist und der von dem Neigungswinkelerfassungsmittel (S_{A}) erfasste Neigungswinkel größer oder gleich einem eingestellten Winkel ist, das Unterstützungsverhältnis auf einen Wert größer als 1 eingestellt wird, während in jedem anderen Zustand als dem ersten Zustand das Unterstützungsverhältnis auf einen Wert kleiner oder gleich 1 eingestellt wird.

## Revendications

1. Bicyclette à assistance motorisée ayant des moyens de détection de force d'enfoncement (S_{T}) pour détecter une force d'enfoncement exercée par un cycliste, et un moteur électrique (15) capable d'exercer une force d'aide selon la force d'enfoncement détectée par lesdits moyens de détection de force d'enfoncement (S_{T}), un dispositif de commande de force d'aide étant fourni, comportant une commande (31) pour commander le fonctionnement dudit moteur électrique (15),
**caractérisée en ce que** ladite commande (31) commande le fonctionnement dudit moteur électrique (15) de sorte qu'un rapport d'aide (force d'aide/force d'enfoncement) défini comme le rapport de la force d'aide par l'intermédiaire dudit moteur électrique (15) sur la force d'enfoncement exercée par ledit cycliste est augmenté dans une plage prédéterminée de la force d'enfoncement détectée par lesdits moyens de détection de force d'enfoncement (S_{T}).

2. Bicyclette à assistance motorisée selon la revendication 1, dans laquelle ladite commande (31) commande le fonctionnement dudit moteur électrique (15), de sorte que lorsque la force d'enfoncement détectée par lesdits moyens de détection de force d'enfoncement (S_{T}) est supérieure ou égale à une force établie, ledit rapport d'aide est établi à 1, tandis que lorsque la force d'enfoncement détectée par lesdits moyens de détection de force d'enfoncement (S_{T}) est inférieure à ladite force établie, ledit rapport d'aide est établi à une valeur supérieure à 1.

3. Bicyclette à assistance motorisée selon la revendication 1, dans laquelle ladite commande (31) commande le fonctionnement dudit moteur électrique (15) de sorte que ledit rapport d'aide est augmenté graduellement à partir de 1 avec une augmentation de la force d'enfoncement détectée par lesdits moyens de détection de force d'enfoncement (S_{T}).

4. Bicyclette à assistance motorisée selon la revendication 2, dans laquelle ladite commande (31) commande le fonctionnement dudit moteur électrique (15) de sorte que lorsque la force d'enfoncement détectée par lesdits moyens de détection de force d'enfoncement (S_{T}) est supérieure ou égale à une force établie maximum supérieure à ladite force établie, ledit rapport d'aide est établi à une valeur inférieure à 1.

5. Bicyclette à assistance motorisée selon la revendication 1, comportant de plus des moyens de détection de vitesse de véhicule (S_{V}) pour détecter une vitesse de véhicule de ladite bicyclette, dans laquelle ladite commande (31) commande le fonctionnement dudit moteur électrique (15) de sorte que lorsque la vitesse de véhicule détectée par lesdits moyens de détection de vitesse de véhicule (S_{V}) est dans des zones de vitesses lente et médiane inférieures ou égales à une vitesse établie, ledit rapport d'aide est établi à une valeur supérieure ou égale à 1, tandis que lorsque la vitesse de véhicule détectée par lesdits moyens de détection de vitesse de véhicule (S_{V}) est dans une zone de vitesse lente inférieure ou égale à une autre vitesse établie inférieure à ladite vitesse établie, ledit rapport d'aide est diminué avec une augmentation de la force d'enfoncement détectée par lesdits moyens de détection de force d'enfoncement (S_{T}).

6. Bicyclette à assistance motorisée selon la revendication 1, comportant de plus des moyens de détection de vitesse de véhicule (S_{V}) pour détecter une vitesse de véhicule de ladite bicyclette, dans laquelle ladite commande (31) commande le fonctionnement dudit moteur électrique (15) de sorte que dans une première condition dans laquelle la vitesse de véhicule détectée par lesdits moyens de détection de vitesse de véhicule (S_{V}) est inférieure ou égale à une vitesse établie, et la force d'enfoncement détectée par lesdits moyens de détection de force d'enfoncement (S_{T}) est supérieure ou égale à une force établie, ledit rapport d'aide est établi à une valeur supérieure à 1, tandis que dans des conditions quelconques autres que ladite première condition, ledit rapport d'aide est établi à une valeur inférieure ou égale à 1.

7. Bicyclette à assistance motorisée selon la revendication 1, comportant de plus des moyens de détection d'angle de pente (S_{A}) pour détecter un angle de pente d'une surface de route sur laquelle ladite bicyclette se déplace, dans laquelle ladite commande (31) commande le fonctionnement dudit moteur électrique (15) de sorte que lorsque l'angle de pente détecté par lesdits moyens de détection d'angle de pente (S_{A}) est inférieur ou égal à un angle établi, ledit rapport d'aide est augmenté à partir de 1 avec un augmentation de l'angle de pente.

8. Bicyclette à assistance motorisée selon la revendication 1, comportant de plus des moyens de détection d'angle de pente (S_{A}) pour détecter un angle de pente d'une surface de route sur laquelle ladite bicyclette se déplace, des moyens de détection de vitesse de véhicule (S_{V}) pour détecter une vitesse de véhicule de ladite bicyclette, dans laquelle ladite commande (31) commande le fonctionnement dudit moteur électrique (15) de sorte que dans une première condition dans laquelle la vitesse de véhicule détectée par lesdits moyens de détection de vitesse de véhicule (Sᵥ) est inférieure ou égale à une vitesse établie, et l'angle de pente détecté par lesdits moyens de détection d'angle de pente (S_{A}) est supérieur ou égal à un angle établi, ledit rapport d'aide est établi à une valeur supérieure à 1, tandis que dans des conditions quelconques autres que ladite première condition, ledit rapport d'aide est établi à une valeur inférieure ou égale à 1.
